# EUROPEAN PATENT SPECIFICATION

(11) **EP 3 310 582 B1**
(45) Date of publication and mention of the grant of the patent: **30.12.2020**
(21) Application number: 16727891.0
(22) Date of filing: 19.05.2016
(51) Int. Cl.: B60B 37/10

(54) **WHEEL AXLE ASSEMBLY**
RADACHSENANORDNUNG
ENSEMBLE ESSIEU DE ROUE

(30) Priority: 22.06.2015 US 201514746478
(43) Date of publication of application: 25.04.2018
(73) Proprietor: Carter, Mark C., Norco, California 92860 (US)
(72) Inventor: Carter, Mark C., Norco, California 92860 (US)
(74) Representative: Sandri, Sandro
(86) International application number: PCT/US2016/033308
(87) International publication number: WO 2016/209436

(56) References cited:
- US-A- 4 765 646
- US-A1- 2006 181 141
- US-B1- 6 808 186
- US-B1- 7 617 956

## Description

### BACKGROUND

The present invention is directed to wheel axle assemblies, and more particularly to a wheel assembly for moving heavy objects over flat or uneven terrain with the capability of easily removing the wheel assembly for the purpose of changing the wheels or for storing the device.

Collapsible shelters such as those offered by International E-Z Up, Inc. have become ubiquitous at parks, beaches, athletic events, and a myriad of other locations where respite from the sun and other elements is desired. These collapsible shelters are perfect for creating a covered environment during the event, and then the shelter is quickly collapsed into a compact configuration for transportation. The ease in which these shelters are expanded and contracted have led to widespread commercial success, but the shelters can be relatively heavy, weighing up to forty pounds or more. For this reason, a carry case with handles is typically provided to make the transportation of the shelter easier. In light of the weight factor, however, it may be preferable to roll the shelter while in the carrying case rather than carrying the shelter when transporting the shelter to and from the event. Accordingly, some models include a protective carrying case or bag that is equipped with small (approximately one inch) wheels that are part of the carrying case and allow the encased shelter to roll along a smooth flat surface. An issue arises, however, when the permanently attached wheels must navigate some irregular terrain such as sand or uneven pavement. The top heavy carry case can become unstable, making it difficult to roll the shelter. Moreover, the permanent wheels cannot be exchanged for different wheels if the terrain or conditions suggest a different set.

What is needed is a solution to the transportation of shelters, carrying cases, and other bulk objects in general that includes an exchangeable wheel assembly that promotes movement over a variety of surfaces and terrains, and which can be easily removed when desired such that the unit may be stacked or be stored without the wheel assembly while further permitting the facile change of one set of wheels for another. Document US 6808186 B1 discloses a wheel structure constructed to include a wheel bracket connectable to the bottom cuff of a golf bag, a wheel axle inserted through axle holes of the wheel bracket, two wheels, two connectors respectively mounted in the center axle holes of the wheels and capped on the ends of the wheel axle, and two clamps respectively mounted in spacer blocks in the connector to secure the ends of the wheel axle to the connectors.

### SUMMARY OF THE INVENTION

The present invention is a wheel assembly comprising the features of claim 1. The bracket is attached to the bulk object such as a roller bag or carrying case, and the wheel assembly quickly and easily mounts to the bracket via bosses extending from the bracket. The axle of the wheel assembly is supported by the bosses to provide a rolling engagement that allows the attached wheels to rotate freely. The wheels in this configuration can be substantially larger, such as four to six inches or more, to better navigate uneven surfaces or problematic terrain such as sand or gravel. The wheels on the axle fix the assembly to the bracket through the bosses, such that as long as the wheels are in place the wheel assembly is reliably secured to the bracket on the bulk object. When the wheel assembly is no longer needed or an exchange of the wheels are desired, a first wheel is removed from the axle to allow the axle to be slid through and out the bosses, leaving only the bracket on the bulk object. In the case of a wheel exchange, the new wheels can be mounted on the axle and quickly replaced on the bracket.

To secure the wheels to the axle while permitting quick release, the wheels may be locked on the axle with a specialized locking cap placed over the ends of the axle. The locking cap incorporates a two stage clip that holds the wheel onto the axle when secured to the assembly. To facilitate engagement of the clip with the axle, the axle may be provided with an annular groove between the end of the axle and the outer surface of the wheel. The annular groove is engaged by the two stage clip, which may have a hairpin-like shape including a first stage having a semi-circular (or other polygonal or rounded shape) portion with a diameter/width greater than the diameter of the annular groove on the axle, and a second stage having a parallel, pinched, or necked configuration wherein opposite sides of the second stage are separated by a distance that is less than the diameter of the axle and are biased to bear against the surface of the annular groove. The two stage clip can easily be manually transitioned from a first position in which the clip is engaged with the axle at the narrowed (second stage) portion thereby fixing the wheel while simultaneously preventing the wheel from slipping off the axle, to a second position where the larger circular (first stage) portion of the clip is loosely about the axle, permitting the clip to easily slip off the axle and thereby allowing the wheel to be removed from the axle. Once a wheel is removed, the axle may be slipped through the bosses on the bracket and the entire wheel assembly separated from the bracket.

Other features and advantages of the present invention will become more apparent from the following detailed description of the preferred embodiments in conjunction with the accompanying drawings, which illustrate, by way of example, the operation of the invention.

### BRIEF DESCRIPTION OF THE DRAWINGS

FIG. 1 is a front view of a carrying case incorporating a first embodiment of a wheel assembly of the present invention;
FIG. 2 is an enlarged perspective view of the wheel assembly of FIG. 1;

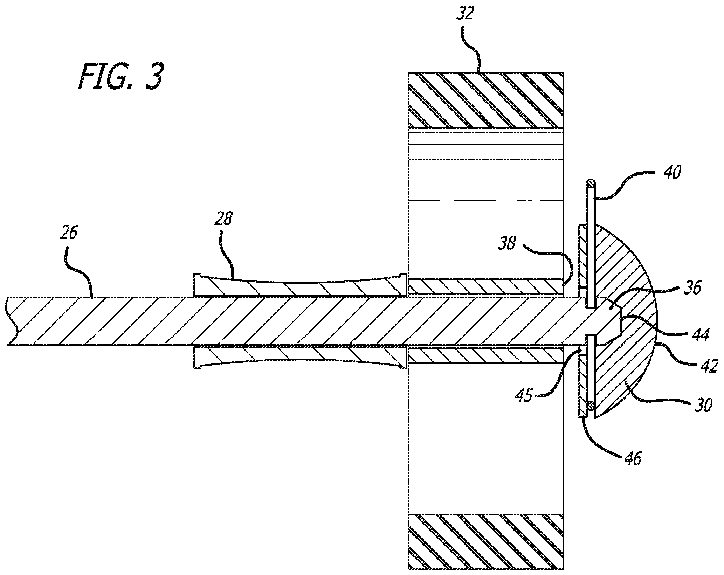

FIG. 3 is a cross sectional view of the wheel and locking cap of FIG. 1;
FIG. 4 is an exploded view of the wheel assembly of FIG. 1; and
FIG. 5 is a front view, partially in shadow, of the locking cap of FIG. 1.

### DETAILED DESCRIPTION OF THE PREFERRED EMBODIMENTS

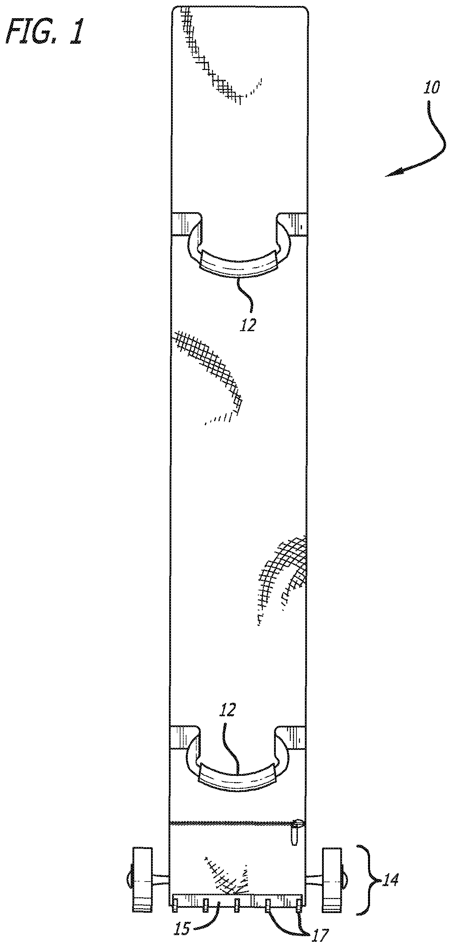

Figure 1 depicts a case 10 for a collapsible shade station, which may be a flexible cloth material or a more resilient sturdy material (e.g., plastic, aluminum, or the like) as dictated by the needs of the user. The case 10 may include handles 12 along with a zippered opening along a top surface or bottom surface, although other closure means are possible. Also, while shown in generally a rectangular profile, the case 10 may take a number of different shapes and sizes without departing from the present invention. Along a bottom edge of the case 10 is a wheel assembly 14 that can be quickly and easily affixed to and released from the case 10 as needed using a quick-release system as described more fully below. It is to be understood that while a two-wheeled assembly is illustrated, the invention can be incorporated into multiple other wheel counts, particularly three and four wheeled variants. The case 10 preferably includes a stabilizer on the opposite side of the wheel assembly. The stabilizer may include small legs 17 or other projections that offset the inclination of the carrying case 10 due to the presence of the wheel assembly. The stabilizer establishes an optimum angle of inclination of the carry case 10 when the wheel assembly is in place to make tilting the carrying case easy for rolling. That is, the stabilizer can offer a 10 to 20 degree tilt of the carrying case 10 with the wheel assembly in place that keeps the carrying case upright but makes the transition from upright to tilt easier for the user.

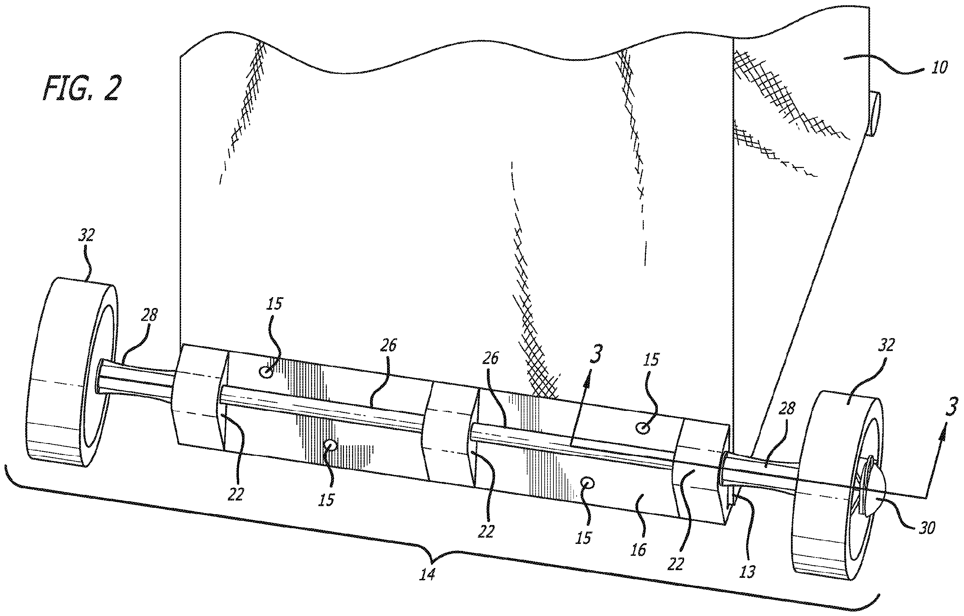

As seen in Figure 2, the wheel assembly 14 includes an "L"-shaped bracket 16 mounted to a first bottom edge 13 of the roller bag or case 10 using rivets 15, snaps, sewn stitches, ties, or other mode of securely attaching the bracket 16. In the case of rivets 15, the bracket is formed with a plurality of holes that permit the rivets 15 to pass through and cooperate with matching holes on the surface of the case 10. For a less permanent coupling, the bracket 16 can snap onto the case 10 using the appropriate structures (snaps, locking tabs, etc.), although the preferred embodiment is to permanently affix the bracket to the case 10 using some rigid connection. The "L"-shaped bracket 16 includes a first horizontal surface 18 and a first vertical surface 20, where the bottom edge 13 of the case 10 mates with the bracket's horizontal and vertical surfaces 18,20 in a complementary manner. The attachment of the bracket 16 to the case 10 is preferably through both the horizontal and vertical surfaces using fasteners 15 of a particular type to create a more secure coupling of the bracket and the case.

The bracket 16 is formed with a plurality of bosses 22 to carry the axle 26 of the wheel assembly. The bosses 22 preferably have a triangular profile with a rounded vertex, where each boss 22 is equally spaced apart along the bracket 16 and are generally congruent, although different thicknesses are possible for end and middle bosses. The bosses 22 each include a hole of a diameter selected to accommodate the axle 26 of the wheel assembly 14, each hole aligned collinearly with the holes of the other bosses 22. Thus, a single axle 26 can pass through the plurality of bosses 22 of the bracket 16 in such a manner that the axle 26 when disposed in the bosses 22 is substantially parallel to the edge 13 of the case 10 and parallel to the horizontal surface 18 of the bracket 16. It is to be understood that the number and shape of the bosses 22 are not critical to the present invention as long as the axle 26 is adequately supported on the bracket 16 and may rotate freely on the bracket without wobble or excessive play.

With the bracket 16 secured to the case 10, an axle 26 can be passed through the bosses 22 as shown in Figure 2. With the axle 26 disposed in the bracket 16 at the collinear holes, a pair of spacers 28 can be placed over the ends of the axle on the outside of the outermost bosses to center the axle 26 on the bracket 16 and prevent transverse displacement of the axle when in use. The spacers 28 are preferably cylindrical sleeves with an inner diameter that is slightly greater than the diameter of the axle 26 to create a loose fit on the axle, and the spacers 28 have a length such that when both spacers 28 are placed on the axle 26 on the outside of the bracket 16, the axle still has enough length to support at least one pair of wheels 32 and a pair of locking end caps 30. After the spacers 28 are placed on the axle, a pair of wheels 32, preferably having a diameter that is at least four inches (4"), are then placed on the axle 26 for rotational movement thereabout. The spacers 28 center the wheels 32 with respect to the case 10, allowing the case to be pulled over both smooth and rough surfaces such as asphalt, sand, gravel, dirt, etc., with the large wheels 32 rolling easily over imperfect surfaces.

To secure the wheels 32 to the axle 26, each end of the axle includes a circumferential groove 34 approximately one half to one inch (1/2" - 1") from the end of the axle 26. The circumferential groove 34 establishes a reduced radial dimension when compared with the adjoining sections of the axle 26. In a preferred embodiment, the tips on the end of the axle 26 adjacent the circumferential groove 34 terminate in a frusto-conical element 36 that tapers at the end of the axle. When the wheels 32 and the spacers 28 are both mounted on the axle 26 about the bracket 16, the circumferential groove 34 and the frusto-conical element 36 are exposed adjacent the wheel hub 38. The locking caps 30 are then placed over the frusto-conical element 36 and the circumferential groove 34 to lock the wheels 32 on the axle 26 in a fixed wheel assembly 14. With the wheels 32 in place and locked on the axle 26, the case 10 can thusly be rolled over flat or uneven surfaces (such as for example from a vehicle to a beach or grass park), and when the wheel assembly 14 is no longer needed, one of the locking caps 30 can be removed, the wheel 32 and spacer 28 removed, and the axle 26 slid through the bosses 22 of the bracket 16 to completely disassemble the wheel assembly 14 from the case 10. When removed, the case 10 may be stored in a more compact configuration without the large wheels 32 taking up unnecessary space. Also, different types of wheels can be exchanged and replaced with little effort by disassembling the wheel assembly and simply exchanging one set of wheels for another.

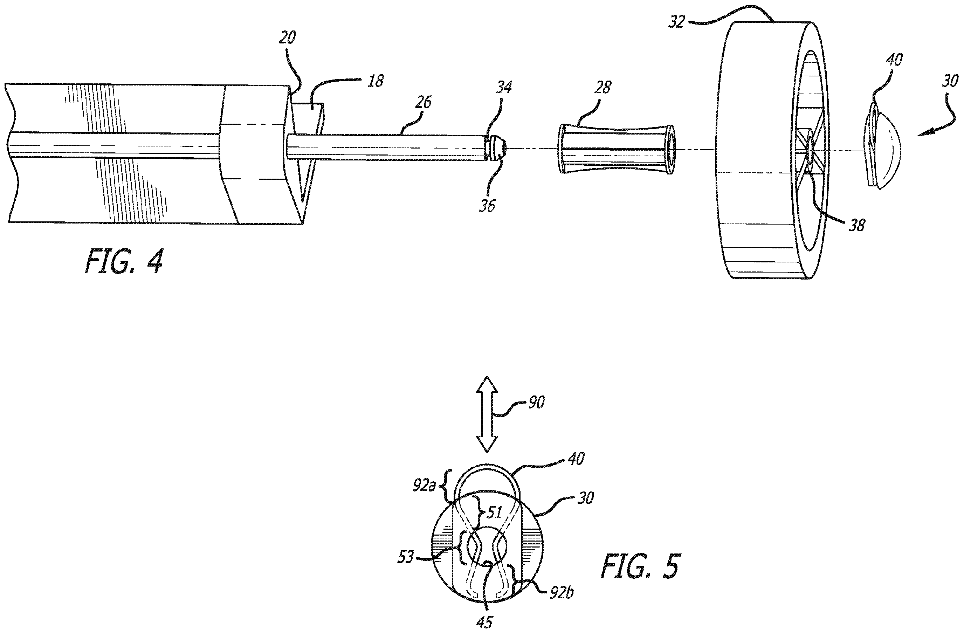

The locking caps 30 are designed to engage the axle 26 at the circumferential groove 34 using a two-stage clip 40 having two sections or stages, an interfering part 53 and a non-interfering part 51 (See Fig. 5). When the non-interfering (first stage) part 51 is centered within the locking cap 30, the wire or bar that forms the semi-circular portion does not engage the circumferential groove 34 on the axle 26, permitting the end cap 30 to slide over (and off) the axle freely. The end cap 30 can be positioned on the axle 26 or removed from the axle when the clip 40 is in this position. Once the spacers 28 and wheels 32 are mounted on the axle 26, the locking caps 30 are placed over the frust-conical elements 36 of the axle such that the clip 40 is aligned over the circumferential groove 34. With the locking cap 30 in this position, the clip 40 is pushed or otherwise urged from the larger, semi-circular portion of the clip 40 over the circumferential groove 34 to the narrower, necked, pinched, or smaller diameter portion of the clip being centered within the locking cap 30 (See Fig. 5). The clip 40 in this configuration slips into the circumferential groove 34 and about the axle 26 at its reduced radius, preventing the locking cap 30 from sliding along the axle 26 and, if the fit between the clip 40 and the groove 34 is sufficiently tight, will "lock" the locking cap 30 onto the axle 26 at the circumferential groove 34 (See Fig. 4). The wheel assembly 14 is now fully operational and can be used for its intended purpose.

To disassemble the wheel assembly 14, the two stage clip 40 is pulled or otherwise transitioned from the narrow or smaller diameter portion being centered over the axle 26 to the larger diameter portion (in the direction of arrow 90 of Fig. 5), disengaging the clip 40 from the circumferential groove 34 on the axle 26. In a preferred embodiment, the clip 40 is transitioned by simply pushing a portion 92a, 92b of the clip 40 that extends out of the locking cap 30 until the proper stage of the clip 40 is engaged or disengaged with the circumferential groove 34 on the axle 26. Once the locking cap 30 is disengaged, it can be slid off the axle 26 and the spacer 28 and wheel 32 removed. The axle 26 can then be removed from the bracket 16 by sliding it out of the bosses 22 in a quick and convenient manner. The wheels 32, spacers 28, and locking caps 30 can be stored separately from the roller bag/carrying case 10, conserving space when compared with the assembled configuration.

The locking caps 30 may include a dome-shaped hub cap section 42 to cover the end of the axle, including a frusto-conical aperture 44 sized to receive the mating end of the axle so as to center the locking cap 30 on the axle 26 and establish the correct placement of the clip 40 over the circumferential groove 34 when the mating frusto-conical elements are fully engaged. The locking cap 30 further includes a smooth face plate 46 that bears against the outer hub 38 of the wheel 32 when the locking cap 30 is locked on the axle 26 to prevent the wheel 32 from drifting on the axle. The face plate 46 includes a hole 45 sized to allow the axle 26 to pass through and enter the aperture 44 on the hub cap section 42. The face plate 46 and the hub cap 42 are connected in such a manner that the clip 40 can enter the path of the axle 26 as it moves from the face plate 46 to the hub cap 42. This can be achieved, for example, by arcuate connectors (not shown) above and below the hole 45 in the face plate 46 that connect the face plate 46 to the hub cap 42, but between the arcuate connectors are gaps that the clip's narrow section 53 to intercede and engage the circumferential groove 34 when needed to lock the end cap 30 on the axle 26.

The clip 40 on the locking cap 30 may be a metal rod that is bent or otherwise formed into the two stage clip, although the clip 40 could take other forms such as a plate having a cut-out of the shape needed to engage and disengage the axle. The clip 40 is held between the dome-shaped hub cap 42 and the face plate 46 so that it can move linearly from its first position (disengaged) to its second position (engaged) but is otherwise captured between the two portions of the locking cap 30. When the clip 40 is in the second or engaged position, the larger diameter section 92a of the clip 40 protrudes beyond the face plate 46 and dome-shaped cap 30 as shown in Figure 5. A user can push down on the exposed larger section 92a of the clip 40 in the direction of arrow 90to force the narrow portion 53 of the clip off the circumferential groove 34 and thereby disengage the clip 40 from the axle 26. This action in turn preferably exposes the narrow or smaller diameter portion 92b of the clip on the opposite side of the locking cap 30 while the larger diameter section 51 is about the axle 26. In a like manner, the clip 40 can be engaged by pushing the smaller diameter or narrow section 92b of the clip so that the clip 40 engages the axle 26 at the circumferential groove 34, locking the cap 30 while exposing the larger diameter section 92a on the opposite side. In this manner, the locking cap 30 can be quickly and easily engaged and disengaged with the axle 26 by simply manually pushing on the exposed portion of the clip 40. It is important that the fit between the clip 40 and the circumferential groove 34 be of a sufficient character that the clip 40 will not become disengaged when the case 10 is rolled over rough or uneven terrain, so the press fit should take some effort to engage and disengage to promote the desired operation.

## Claims

1. A releasable wheel assembly (14) comprising:
a bracket (16) including a plurality of bosses (22), each boss including a hole;
an axle (26) passing through the hole of each boss, the axle including first and second circumferential grooves (34) adjacent to respective end of the axle;
a first pair of wheels (32) on the axle, the axle extending through a hub (38) on each wheel;
a pair of spacers (28), a first spacer of the pair of spacers disposed between a first wheel of the pair of wheels and a first boss of the plurality of bosses, a second spacer of the pair of spacers disposed between a second wheel of the pair of wheels and a second boss of the plurality of bosses, a third boss of the plurality of bosses disposed between the first boss and the second boss, and the axle extending through each wheel of the pair of wheels and extending through each spacer of the pair of spacers; and
a pair of locking caps (30), a locking cap of the pair of locking caps configured to fit over a respective end of the axle, respective locking caps comprising a clip (40) for engaging the axle at a circumferential groove to prevent movement of the locking cap along the axle,
**characterized in that** said bracket (16) is "L"-shaped having a horizontal surface (18) and a vertical surface (20) adapted to engage a corner of a case or storage unit (10) through fasteners (15) which permanently attach the horizontal surface (18) and the vertical surface (20) of the bracket (16) to the case or storage unit, thereby allowing the axle (26), the wheels (32), the spacers (28) and the locking caps (30) to be separated from the bracket (16) that remains permanently engaged on the corner of the case or storage unit (10).

2. The releasable wheel assembly of claim 1, **characterized in that** a locking cap (30) of the pair of locking caps comprises a hub cap (42) and a face plate (46), where the clip (40) is disposed between the hub cap and the face plate.

3. The releasable wheel assembly of any one of the preceding claims, **characterized in that** the clip (40) comprises a first portion (92a) adapted to slide over the axle without engagement therewith, and a second portion (92b) adapted to engage the axle at the circumferential groove.

4. The releasable wheel assembly of any one of the preceding claims, **characterized in that** each hub (38) is triangular shaped.

5. The releasable wheel assembly of any one of the preceding claims, **characterized in that** the axle (26) includes frusto-conical ends (36) and respective locking caps (30) comprise apertures (44) to receive said frusto-conical ends.

6. The releasable wheel assembly of any one of the preceding claims, **characterized in that** it further comprises a plurality of rivets in the bracket for attachment to the case or storage unit (10).

7. The releasable wheel assembly of any one of the preceding claims, **characterized in that** the case or storage unit (10) is a flexible bag having a rectangular profile.

8. A case or storage unit (10) for carrying objects, made of a flexible material and including a zippered opening;
**characterized in that** it is provided with a releasable wheel assembly according to any one of claims 1 to 7.

9. The case or storage unit of claim 8, **characterized in that** it comprises a stabilizer (15) mounted on a first lower edge of the case or storage unit (10) orienting the case or storage unit (10) ten to twenty degrees off vertical when the case or storage unit is rested upon the stabilizer and wheel assembly and when the wheel assembly is mounted on the bracket (16).

10. The case or storage unit of any one of claims 8-9, **characterized in that** if further comprises a second pair of wheels that can be exchanged with the first pair of wheels (32).

11. The case or storage unit of claim 8, **characterized in that** if further comprises a second pair of wheels that are disposed on the axle adjacent the first pair of wheels (32).

## Patentansprüche

1. Entfernbare Radanordnung (14), die Folgendes aufweist:
einen Träger (16), der eine Vielzahl an Naben (22) aufweist, wobei jede Nabe ein Loch aufweist;
eine Achse (26), die durch das Loch jeder Nabe verläuft, wobei die Achse eine erste und zweite Umfangskerbe (34) angrenzend an dem jeweiligen Ende der Achse aufweist;
ein erstes Paar Räder (32) auf der Achse, wobei sich die Achse durch eine Radnabe (38) an jedem Rad erstreckt;
ein Paar Abstandsstücke (28), wobei ein erstes Abstandsstück des Paars von Abstandsstücken zwischen einem ersten Rad des Paars von Rädern und einer ersten Nabe der Vielzahl an Naben angeordnet ist, ein zweites Abstandsstück des Paars von Abstandsstücken zwischen einem zweiten Rad des Paars von Rädern und einer zweiten Nabe der Vielzahl an Naben angeordnet ist, eine dritte der Naben der Vielzahl an Naben zwischen der ersten Nabe und der zweiten Nabe angeordnet ist, und sich die Achse durch jedes Rad des Paars von Rädern erstreckt und sich durch jedes Abstandsstück des Paars von Abstandsstücken erstreckt; und
ein Paar Verschlusskappen (30), wobei eine Verschlusskappe des Paars von Verschlusskappen dazu ausgelegt ist, über ein jeweiliges Ende der Achse zu passen, wobei die jeweiligen Verschlusskappen eine Klammer (40) zum Eingreifen mit der Achse an einer Umfangsnut aufweisen, um Bewegung der Verschlusskappe entlang der Achse zu verhindern,
**dadurch gekennzeichnet, dass** der Träger (16) "L"-förmig ist, mit einer horizontalen Oberfläche (18) und einer vertikalen Oberfläche (20), die dazu ausgelegt sind, ein Rand eines Behälters bzw. einer Aufbewahrungseinheit (10) einzugreifen, mittels Befestigungselementen (15), die die horizontale Oberfläche (20) und die vertikale Oberfläche (20) des Trägers (16) permanent an dem Behälter bzw. der Aufbewahrungseinheit befestigen, wodurch gestattet wird, dass die Achse (26), die Räder (32), die Abstandsstücke (28) und die Verschlusskappen (30) von dem Träger (16) getrennt werden können, welcher permanent mit dem Rand des Behälters bzw. der Aufbewahrungseinheit (10) in Eingriff bleibt.

2. Entfernbare Radanordnung nach Anspruch 1, **dadurch gekennzeichnet, dass** eine Verschlusskappe (30) des Paars von Verschlusskappen eine Nabenkappe (42) und eine Planscheibe (46) aufweist, wobei die Klammer (40) zwischen der Nabenkappe und der Planscheibe angeordnet ist.

3. Entfernbare Radanordnung nach einem der vorhergehenden Ansprüche, **dadurch gekennzeichnet, dass** die Klammer (40) einen ersten Abschnitt (92a), der dazu ausgelegt ist, über die Achse zu gleiten, ohne damit einzugreifen, und einen zweiten Abschnitt (92b), der dazu ausgelegt ist, die Achse an der Umfangsnut einzugreifen, aufweist.

4. Entfernbare Radanordnung nach einem der vorhergehenden Ansprüche, **dadurch gekennzeichnet, dass** jede Nabe (38) dreieckig geformt ist.

5. Entfernbare Radanordnung nach einem der vorhergehenden Ansprüche, **dadurch gekennzeichnet, dass** die Achse (26) kegelstumpfförmige Enden (36) und entsprechende Verschlusskappen (30), die Öffnungen (44) zum Aufnehmen der kegelstumpfförmige Enden aufweisen, aufweist.

6. Entfernbare Radanordnung nach einem der vorhergehenden Ansprüche, **dadurch gekennzeichnet, dass** sie ferner eine Vielzahl an Nieten in dem Träger zum Befestigen an dem Behälter bzw. der Aufbewahrungseinheit (10) aufweist.

7. Entfernbare Radanordnung nach einem der vorhergehenden Ansprüche, **dadurch gekennzeichnet, dass** der Behälter bzw. die Aufbewahrungseinheit (10) eine anpassungsfähig Tasche ist, die ein dreieckiges Profil aufweist.

8. Behälter bzw. Aufbewahrungseinheit (10) zum Transportieren von Objekten, der bzw. die aus einem anpassungsfähigen Material hergestellt ist und eine Reißverschlussöffnung aufweist;
**dadurch gekennzeichnet, dass** diese/r mit einer entfernbaren Radanordnung nach einem der Ansprüche 1 bis 7 versehen ist.

9. Behälter bzw. Aufbewahrungseinheit nach Anspruch 8, **dadurch gekennzeichnet, dass** diese/r eine Stütze (15) aufweist, die an einer ersten unteren Kante des Behälters bzw. der Aufbewahrungseinheit (10) angebracht ist und den Behälter bzw. die Aufbewahrungseinheit (10) zehn bis zwanzig Grad von der Vertikale neigt, wenn der Behälter bzw. die Aufbewahrungseinheit auf der Stütze und der Radanordnung aufliegt und wenn die Radanordnung an dem Träger (16) angebracht ist.

10. Behälter bzw. Aufbewahrungseinheit nach einem der Ansprüche 8 bis 9, **dadurch gekennzeichnet, dass** diese/r ferner ein zweites Paar Räder aufweist, das mit dem ersten Paar Räder (32) ausgewechselt werden kann.

11. Behälter bzw. Aufbewahrungseinheit nach Anspruch 8, **dadurch gekennzeichnet, dass** diese/r ferner ein zweites Paar Räder, das an der Achse angrenzend an dem ersten Parr Räder (32) angeordnet ist, aufweist.

## Revendications

1. Un ensemble de roues démontable (14) comprenant :
un support (16) comprenant une pluralité de bossages (22), chaque bossage comprenant un trou ;
un essieu (26) passant à travers le trou de chaque bossage, l'axe comprenant des première et deuxième rainures circonférentielles (34) adjacentes à l'extrémité respective de l'essieu;
une première paire de roues (32) sur l'essieu, l'essieu s'étendant à travers un moyeu (38) sur chaque roue ;
une paire d'entretoises (28), une première entretoise de la paire d'entretoises disposée entre une première roue de la paire de roues et un premier bossage de la pluralité de bossages, une deuxième entretoise de la paire d'entretoises disposée entre une deuxième roue de la paire de roues et un deuxième bossage de la pluralité de bossages, un troisième bossage de la pluralité de bossages disposé entre le premier bossage et le deuxième bossage, et l'essieu s'étendant à travers chaque roue de la paire de roues et s'étendant à travers chaque entretoise de la paire d'entretoises ; et
une paire de capuchons de verrouillage (30), un capuchon de verrouillage de la paire de capuchons de verrouillage étant configuré pour s'adapter sur une extrémité respective de l'essieu, les capuchons de verrouillage respectifs comprenant un clip (40) pour engager l'essieu au niveau d'une rainure circonférentielle afin d'empêcher le mouvement du capuchon de verrouillage le long de l'essieu,
**caractérisé en ce que** ledit support (16) est en forme de « L » ayant une surface horizontale (18) et une surface verticale (20) adaptée pour engager un coin d'une valise ou d'une unité de stockage (10) par des attaches (15) qui fixent de manière permanente la surface horizontale (18) et la surface verticale (20) du support (16) à la valise ou à l'unité de stockage, permettant ainsi à l'axe (26), aux roues (32), aux entretoises (28) et aux capuchons de verrouillage (30) d'être séparés du support (16) qui reste engagé de manière permanente sur le coin de la valise ou de l'unité de stockage (10).

2. Ensemble de roues démontable selon la revendication 1, **caractérisé en ce qu'**un capuchon de verrouillage (30) de la paire de capuchons de verrouillage comprend un capuchon de moyeu (42) et une plaque frontale (46), où le clip (40) est disposé entre le capuchon de moyeu et la plaque frontale.

3. Ensemble de roues démontable selon l'une quelconque des revendications précédentes, **caractérisé en ce que** le clip (40) comprend une première partie (92a) adaptée pour glisser sur l'essieu sans engagement avec celui-ci, et une seconde partie (92b) adaptée pour engager l'essieu au niveau de la rainure circonférentielle.

4. Ensemble de roues démontable selon l'une quelconque des revendications précédentes, **caractérisé en ce que** chaque moyeu (38) est de forme triangulaire.

5. Ensemble de roues démontable selon l'une quelconque des revendications précédentes, **caractérisé en ce que** l'essieu (26) comprend des extrémités tronconiques (36) et les capuchons de verrouillage respectifs (30) comprennent des ouvertures (44) pour recevoir lesdites extrémités tronconiques.

6. Ensemble de roues démontable selon l'une quelconque des revendications précédentes, **caractérisé en ce qu'**il comprend en outre une pluralité de rivets dans le support pour la fixation à la valise ou à l'unité de stockage (10).

7. Ensemble de roues démontable selon l'une quelconque des revendications précédentes, **caractérisé en ce que** la valise ou l'unité de stockage (10) est un sac flexible ayant un profil rectangulaire.

8. Une valise ou une unité de stockage (10) pour le transport d'objets, réalisée dans un matériau flexible et comprenant une ouverture à fermeture éclair ;
**caractérisée en ce qu'**elle est munie d'un ensemble de roues démontable selon l'une quelconque des revendications 1 à 7.

9. Valise ou unité de stockage selon la revendication 8, **caractérisée en ce qu'**elle comprend un stabilisateur (15) monté sur un premier bord inférieur de la valise ou de l'unité de stockage (10) orientant la valise ou l'unité de stockage (10) de dix à vingt degrés par rapport à la verticale lorsque la valise ou l'unité de stockage repose sur le stabilisateur et l'ensemble de roues et lorsque l'ensemble de roues est monté sur le support (16).

10. Valise ou unité de stockage selon l'une quelconque des revendications 8-9, **caractérisée en ce qu'**elle comprend en outre une deuxième paire de roues qui peut être échangée avec la première paire de roues (32).

11. Valise ou unité de stockage selon la revendication 8, **caractérisée en ce qu'**elle comprend en outre une deuxième paire de roues qui sont disposées sur l'essieu adjacent à la première paire de roues (32).
